Europäisches Patentamt

European Patent Office

Office européen des brevets

(11) Veröffentlichungsnummer: **0 280 057**
**A1**

(12) # EUROPÄISCHE PATENTANMELDUNG

(21) Anmeldenummer: **88101159.7**

(22) Anmeldetag: **27.01.88**

(51) Int. Cl.⁴: **F16B 39/36** , F16B 31/04 , F16D 1/08

(30) Priorität: **12.02.87 DE 8702116 U**

(43) Veröffentlichungstag der Anmeldung:
**31.08.88 Patentblatt 88/35**

(84) Benannte Vertragsstaaten:
**DE FR GB IT**

(71) Anmelder: **Ringfeder G.m.b.H.
Duisburger Strasse 145
D-4150 Krefeld-Uerdingen(DE)**

(72) Erfinder: **Loosen, Paul
Buschstrasse 331
D-4150 Krefeld 1(DE)**
Erfinder: **Klören, Ulrich
Philadelphiastrasse 171
D-4150 Krefeld 1(DE)**
Erfinder: **Thiele, Hans-Martin
Bismarckplatz 36
D-4150 Krefeld 1(DE)**

(54) **Ausbildung eines Spannsatzes für das Spannen und Sichern einer Schraubverbindung.**

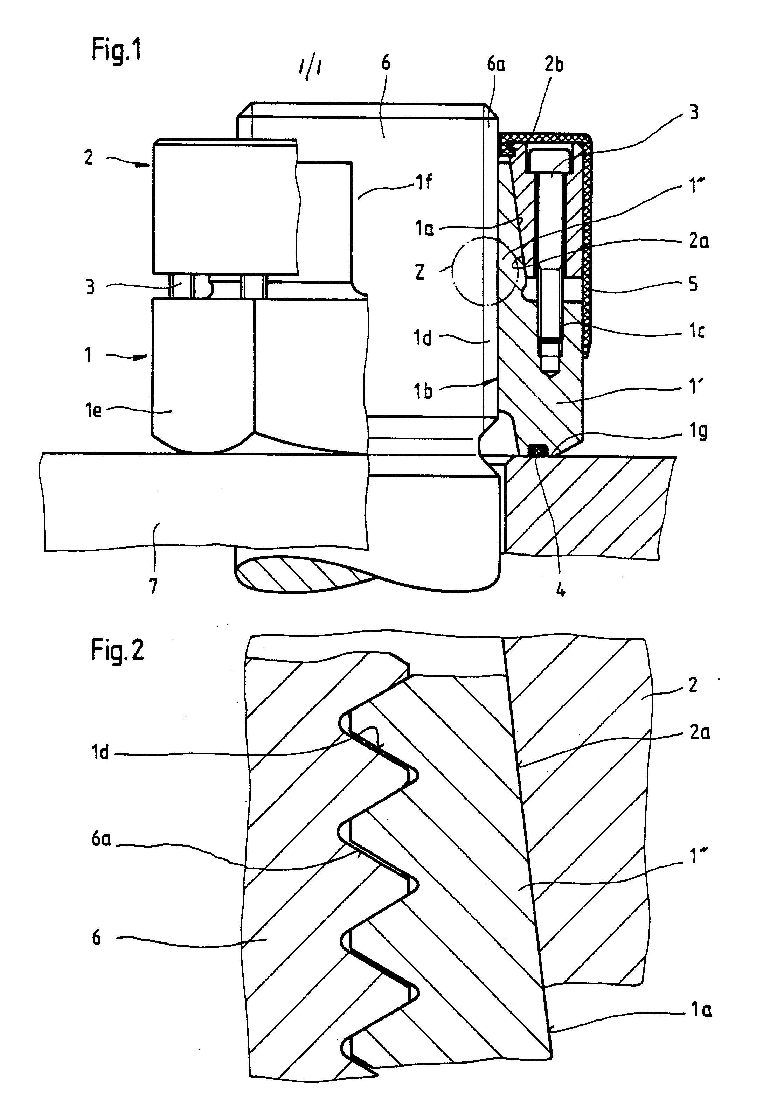

(57) Ein Spannsatz besteht aus zumindest zwei ringartigen Bauteilen (1 und 2). Das erste Bauteil (1) ist aus einem Bund (1') und einem daran angeschlossenen Ansatz (1") gebildet, wobei der Bund (1') und der Ansatz (1") eine gemeinsame innere Mantelfläche (1b) aufweisen. Das zweite Bauteil (2) des Spannsatzes ist als Ring mit einer konischen Innenumfangsfläche (2a) gestaltet und wirkt mit der konischen Außenumfangsfläche (1a) des Ansatzes (1") zusammen. Dieses zweite Bauteil (2) ist auf der konischen Außenumfangsfläche (1a) durch planetarisch angeordnete Spannschrauben (3) spannbar, die in Gewindebohrungen (1c) des Bundes (1') angreifen. Um einen derartigen Spannsatz für das Spannen und Sichern einer Schraubverbindung anwenden zu können, weist die innere Mantelfläche (1b) des Bundes (1') und des Ansatzes (1") ein durchgehendes Muttergewinde (1d) auf, wobei der Bund beispielsweise mit einem Außensechskant (1e) versehen ist, an dem ein Montagewerkzeug angreifen kann (Fig. 1).

Fig.1

## Ausbildung eines Spannsatzes für das Spannen und Sichern einer Schraubverbindung

Die Erfindung betrifft einen aus zumindest zwei ringartigen Bauteilen bestehenden Spannsatz, dessen erstes Bauteil aus einem Bund und einem daran angeschlossenen Ansatz mit einer konischen Außenumfangsfläche gebildet ist, wobei der Bund und der Ansatz eine gemeinsame innere Mantelfläche aufweisen, und dessen zweites, als Ring mit einer konischen Innenumfangsfläche gestaltetes Bauteil mit der konischen Außenumfangsfläche des Ansatzes zusammenwirkt und darauf durch planetarisch angeordnete, in Gewindebohrungen des Bundes eingreifende Spannschrauben spannbar ist.

Spannsätze dienen an sich dem kraftschlüssigen Verbinden von Wellen und Naben, so daß Drehmomente und/oder Schubkräfte übertragbar sind. Bei einem durch das DE-GM 77 36 362 bekannten Spannsatz mit den eingangs genannten Merkmalen ist das erste, innen zylindrische Bauteil - der Bund mit dem Ansatz - auf einem die Welle umgebenden hülsenförmigen Nabenansatz angeordnet. Durch Verspannen des zweiten, innen konischen Bauteiles auf der konischen Außenumfangsfläche des Ansatzes werden dieser Ansatz und weiter der Nabenansatz radial verformt und gegen die Welle gepreßt, wobei das zweite Bauteil elastisch dagegenwirkt.

Der Erfindung liegt die Aufgabe zugrunde, einen Spannsatz der gattungsgemäßen Art für einen neuen Anwendungsbereich auszubilden, nämlich für das Spannen und Sichern einer Schraubverbindung.

Diese Aufgabe wird erfindungsgemäß dadurch gelöst, daß die innere Mantelfläche des Bundes und des Ansatzes ein durchgehendes Muttergewinde aufweist, und der Bund für einen Angriff eines Montagewerkzeuges - beispielsweise entsprechend einer Sechskantmutter oder einer Kreuzlochmutter - gestaltet ist (Außensechskant).

Bei außen kantiger Gestaltung des Bundes ist aus Festigkeitsgründen gemäß einer Ausgestaltung der Erfindung vorgesehen, daß die Gewindebohrungen jeweils innerhalb des Bereiches zusammentreffender Kanten angeordnet sind.

Das radiale Verformen des Ansatzes wird nach einer nächsten Ausführungsform der Erfingung dadurch erleichtert, daß der Ansatz mit mindestens einem axial verlaufenden Schlitz versehen ist.

Um das Gewinde vor Staub und Feuchtigkeit zu schützen, liegt es ferner im Wesen der Erfindung, daß an der vom zweiten Bauteil abgewandten Stirnfläche des Bundes ein Dichtungskörper gehalten ist.

Eine Abschirmung insbesondere der zusammenwirkenden konischen Flächen und der Spannschrauben wird nach einer weiteren Ausgestaltung der Erfindung dadurch erzielt, daß der Bund des ersten Bauteiles und/oder das zweite Bauteil eine Nut oder einen Wulst zum Halten einer aus elastischem Werkstoff bestehenden Schutzhülle aufweist.

Aufbau und Wirkungsweise eines erfindungsgemäßen Spannsatzes werden im folgenden anhand eines in der Zeichnung dargestellten Ausführungsbeispieles näher beschrieben. Es zeigen

Fig. 1 einen auf dem Gewinde eines Schraubenbolzens angeordneten Spannsatz, teilweise im Längsschnitt,

Fig. 2 die Einzelheit Z in Fig. 1 im vergrößerten Maßstab.

Der Spannsatz hat ein erstes Bauteil 1, das aus einem Bund 1' mit einem daran angeschlossenen Ansatz 1" gebildet ist, und ein als Ring mit einer konischen Innenumfangsfläche 2a gestaltetes zweites Bauteil 2. Diese Innenumfangsfläche 2a wirkt mit einer konischen Außenumfangsfläche 1a des Ansatzes 1" zusammen. Die beiden Konusflächen 1a und 2a sind durch planetarisch angeordnete Schrauben 3 gegeneinander spannbar, die in Gewindebohrungen 1c des Bundes 1' eingreifen. Die gemeinsame innere Mantelfläche 1b des Bundes 1' und des Ansatzes 1" weist ein durchgehendes Muttergewinde 1d auf. Der Bund 1' hat einen Außensechskant 1e, an dem ein Schraubenschlüssel ansetzbar ist.

Die so gebildete Einheit der Bauteile 1 und 2 wird auf das Gewinde 6a eines Schraubenbolzens 6 geschraubt, der beispielsweise ein Maschinenteil 7 durchdringt, und mit dem für derartige Schraubverbindungen üblichen Anziehmoment festgedreht. Die dadurch schon bewirkte Vorspannung des Schraubenbolzens 6 wird gesteigert, indem über die Spannschrauben 3 eingeleitete Axialkräfte zunächst an den konischen Flächen 1a und 2a und - unter radialer Verformung des Ansatzes 1" -im weiteren an den keilartig zusammenwirkenden Flanken der Gewinde 1d und 6a (siehe Fig. 2) umgelenkt werden bis kein Gewindespiel mehr vorliegt. Zum leichteren radialen Verformen kann der Ansatz 1" einen oder mehrere axial verlaufende Schlitze 1f aufweisen.

Neben dem Vorteil der größeren Vorspannung für den Schraubenbolzen 6 ergibt sich durch das im verspannten Zustand wesentlich höhere Losdrehmoment eine Sicherung gegenüber einem Lockern der Schraubverbindung. Als weiter günstig wird angesehen, daß die radiale Krafteinleitung in den Schraubenbolzen 6 umfänglich sehr gleicnmäßig erfolgt.

Ein Dichtungskörper 4, der an der vom zweiten Bauteil 2 abgewandten Stirnfläche 1g des Bundes 1' gehaltert ist, und eine Schutzhülle 5 aus elastischem Werkstoff schirmen das Gewinde 6a und den Spannsatz vor Staub und Feuchtigkeit weitgehend ab. Zum Halten der Schutzhülle 5 weist das zweite Bauteil 2 eine Nut 2b auf.

Für ein leichtes Lösen der zusammenwirkenden Konusflächen 1a und 2a - insbesondere wenn deren Konuswinkel im Bereich der Selbsthemmung liegen - können in nicht dargestellte Gewindebohrungen des zweiten Bauteils 2 Abdrückschrauben eingesetzt werden, für die der Bund 1' das Widerlager bildet.

**Ansprüche**

1. Aus zumindest zwei ringartigen Bauteilen (1 und 2) bestehender Spannsatz, dessen erstes Bauteil (1) aus einem Bund (1') und einem daran angeschlossenen Ansatz (1″) mit einer konischen Außenumfangsfläche (1a) gebildet ist, wobei der Bund (1') und der Ansatz (1″) eine gemeinsame innere Mantelfläche (1b) aufweisen, und dessen zweites, als Ring mit einer konischen Innenumfangsfläche (2a) gestaltetes Bauteil (2) mit der konischen Außenumfangsfläche (1a) des Ansatzes (1″) zusammenwirkt und darauf durch planetarisch angeordnete, in Gewindebohrungen (1c) des Bundes (1') eingreifende Spannschrauben (3) spannbar ist, dadurch gekennzeichnet, daß die innere Mantelfläche (1b) des Bundes (1') und des Ansatzes (1″) ein durchgehendes Muttergewinde (1d) aufweist, und der Bund (1') für einen Angriff eines Montagewerkzeuges - beispielsweise entsprechend einer Sechskantmutter oder einer Kreuzlochmutter - gestaltet ist (Außensechskant 1e).

2. Spannsatz nach Anspruch 1, dadurch gekennzeichnet, daß bei außen kantiger Gestaltung des Bundes (1') die Gewindebohrungen (1c) jeweils innerhalb des Bereiches zusammentreffender Kanten angeordnet sind.

3. Spannsatz nach Anspruch 1 oder 2, dadurch gekennzeichnet, daß der Ansatz (1″) mit mindestens einem axial verlaufenden Schlitz (1f) versehen ist.

4. Spannsatz nach einen der Ansprüche 1 bis 3, dadurch gekennzeichnet, daß an der vom zweiten Bauteil (2) abgewandten Stirnfläche (1g) des Bundes (1') ein Dichtungskörper (4) gehaltert ist.

5. Spannsatz nach einem der Ansprüche 1 bis 4, dadurch gekennzeichnet, daß der Bund (1') des ersten Bauteiles (1) und/oder das zweite Bauteil (2) eine Nut (2b) oder einen Wulst zum Halten einer aus elastischem Werkstoff bestehenden Schutzhülle (5) aufweist.

Fig.1

1/1   6   6a   2b   3

2

1f

1a

Z

1"

2a

5

1c

3

1

1d

1e

1b

1'

1g

7

4

Fig.2

2

1d

2a

6a

6

1"

1a

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| A | US-A-2 519 958 (FIRTH) <br> * Figuren 1, 2 * <br> --- | 1 | F 16 B 39/36 <br> F 16 B 31/04 <br> F 16 D 1/08 |
| A | GB-A-2 163 522 (RELIANCE ELECTRIC) <br> * Figur 2 * <br> --- | 1 | |
| A | FR-A- 496 244 (VAURS) <br> * Figuren 1, 2 * <br> --- | 3 | |
| A | US-A-1 353 382 (CRISSINGER) <br> * Figur 1 * <br> --- | 1 | |
| A | DE-A-2 611 237 (RINGFEDER) <br> ----- | | |

**RECHERCHIERTE SACHGEBIETE (Int. Cl.4)**

F 16 B 31/00
F 16 B 39/00
F 16 B 2/00
F 16 D 1/00

Der vorliegende Recherchenbericht wurde für alle Patentansprüche erstellt

| Recherchenort | Abschlußdatum der Recherche | Prüfer |
|---|---|---|
| BERLIN | 28-04-1988 | SCHAEFFLER C.A.A. |